# EUROPÄISCHE PATENTSCHRIFT

(11) **EP 1 132 605 B1**
(45) Veröffentlichungstag und Bekanntmachung des Hinweises auf die Patenterteilung: **25.05.2005**
(21) Anmeldenummer: 01104855.0
(22) Anmeldetag: 28.02.2001
(51) Int. Cl.: G01M 15/00, F02D 35/02

(54) **Verfahren zum Bestimmen des Beginns einer Verbrennung im Zylinder eines Verbrennungsmotors**
Method for detecting the start of combustion in cylinder of internal combustion engine
Procédé pour détecter le début de la combustion dans un cylindre d'un moteur à combustion interne

(30) Priorität: 10.03.2000 DE 10011614
(43) Veröffentlichungstag der Anmeldung: 12.09.2001
(73) Patentinhaber: Delphi Technologies, Inc., Troy, MI 48007 (US)
(72) Erfinder: Wesquet, Alain, 8545 Niederpallen (LU); Engel, Joseph A., 4671 Oberkorn (LU); Glavmo, Magnus P., 8272 Mamer (LU)
(74) Vertreter: Manitz, Finsterwald & Partner GbR

(56) Entgegenhaltungen:
- EP-A- 0 859 149
- WO-A-95/16196
- DE-A- 19 749 816
- US-A- 5 359 883

## Beschreibung

Die Erfindung betrifft ein Verfahren zum Bestimmen des Beginns einer Verbrennung im Zylinder eines Verbrennungsmotors, insbesondere im Zylinder eines Dieselmotors.

Für eine optimierte Regelung eines Verbrennungsmotors ist es von Vorteil, wenn der Zeitpunkt, an dem das Luft-Kraftstoff-Gemisch im Zylinder zündet, möglichst exakt bekannt ist. Üblicherweise wird zu diesem Zweck in Testreihen für die verschiedenen Betriebsbedingungen des Motors eine Tabelle verschiedener Einspritzzeitpunkte und Zündzeitpunkte vorgegeben, mit denen die Motorregelung den Verbrennungsmotor entsprechend betreiben kann. Bei Dieselmotoren, bei denen das Luft-Kraftstoff-Gemisch nicht fremd gezündet wird, sondern sich das Luft-Kraftstoff-Gemisch bei ausreichend hoher Kompression und ausreichend hoher Temperatur im Zylinder selbst entzündet, ist eine exakte Einstellung des Zündzeitpunktes nur möglich, indem die Einspritzparameter, mit denen der Kraftstoff in den Zylinder eingespritzt wird, entsprechend reguliert werden. Eine Regelung des Verbrennungsvorganges in jedem einzelnen Zylinder, bei dem insbesondere der Beginn der Verbrennung erfaßt und die Einspritzparameter entsprechend nachgeregelt werden, ist bisher nicht bekannt.

Es ist Aufgabe der Erfindung, ein Verfahren anzugeben, mit dem der Beginn einer Verbrennung im Zylinder eines Verbrennungsmotors, insbesondere im Zylinder eines Dieselmotors bestimmt werden kann.

Die Erfindung löst die Aufgabe durch ein Verfahren mit den Merkmalen nach Anspruch 1 und insbesondere durch ein Verfahren, aufeinanderfolgend Meßwerte ermittelt und abgespeichert werden, die zumindest eine physikalische Eigenschaft des im Zylinder enthaltenen Gemisches aus Gasen und Kraftstoff beschreiben, jeweils ein Mittelwert aus dem zuletzt abgespeicherten Meßwert und einer vorgegebenen Anzahl von Meßwerten, die dem zuletzt abgespeicherten Meßwert in der Folge unmittelbar vorausgehen, berechnet wird, eine Differenz zwischen dem zuletzt berechneten Mittelwert und dem zuletzt gespeicherten Meßwert gebildet wird, die Differenz mit einem Grenzwert verglichen wird, jeweils ein Meßwert der Folge mit dem diesem Meßwert unmittelbar vorausgehenden Meßwert verglichen wird, wenn die zuletzt berechnete Differenz größer ist als der Grenzwert, und der Meßwert, der sich während der Vergleiche als letzter der miteinander verglichenen Meßwerte von seinem ihm unmittelbar in der Folge vorausgehenden Meßwert unterscheidet, als der Meßwert definiert wird, bei dem die Verbrennung begonnen hat.

Bei dem erfindungsgemäßen Verfahren wird das Gemisch aus Gasen und Kraftstoff im Zylinder bereits vor der Verbrennung überwacht, indem zumindest eine physikalische Eigenschaft des Gemisches, wie beispielsweise die Leitfähigkeit des Gemisches, erfaßt und in Form von Meßwerten abgespeichert wird. Sobald das im Zylinder befindliche Gemisch beispielsweise durch eine Zündkerze gezündet wird oder sich aufgrund des Drucks und der Temperatur im Zylinder selbst entzündet, kommt es auch zu Änderungen der physikalischen Eigenschaften des Gemisches, die gleichfalls erfaßt und in Form der Meßwerte abgespeichert werden. Damit von der Motorregelung erkannt werden kann, ob tatsächlich eine Zündung des Gemisches im Zylinder erfolgt ist, werden bei dem erfindungsgemäßen Verfahren Mittelwerte gebildet, mit denen die abgespeicherten Meßwerte verglichen werden. Die Mittelwerte basieren auf dem jeweils zuletzt abgespeicherten Meßwert und einer vorgegebenen Anzahl von dem zuletzt abgespeicherten Meßwert in der Folge unmittelbar vorausgehenden Meßwerten. Bei geringeren Schwankungen zwischen den ermittelten Meßwerten entspricht der zuletzt abgespeicherte Meßwert etwa dem zuletzt berechneten Mittelwert. Kommt es dagegen zu einer deutlichen Änderung der physikalischen Eigenschaften des Gemisches im Zylinder, die gleichzeitig eine deutliche Änderung der Meßwerte zur Folge hat, weicht der zuletzt abgespeicherte Meßwert deutlich von dem auf dessen Grundlage berechnenden Mittelwert ab, da dieser gleichzeitig auf den zuvor ermittelten Meßwerten beruht.

Zum Vergleich wird deshalb eine Differenz zwischen dem zuletzt berechneten Mittelwert und dem zuletzt gespeicherten Meßwert gebildet, die anschließend mit einem Grenzwert verglichen wird. Sobald die aus dem zuletzt berechneten Mittelwert und dem zuletzt gespeicherten Meßwert gebildete Differenz größer ist als der Grenzwert, wird jeweils ein Meßwert mit einem diesem unmittelbar vorausgehenden Meßwert der Folge verglichen, so daß die Meßwerte in umgekehrter Reihenfolge, in der sie abgespeichert wurden, nacheinander miteinander verglichen werden. Der Meßwert, der sich während des Vergleiches als letzter von seinem ihm unmittelbar in der Folge vorausgehenden Meßwert unterscheidet, definiert den Zeitpunkt, an dem die Verbrennung begonnen hat. Durch das erfindungsgemäße Verfahren ist auf vergleichsweise einfache Weise eine exakte Bestimmung des Zündbeginns der Verbrennung möglich.

Weitere vorteilhafte Weiterbildungen der Erfindung ergeben sich aus der nachfolgenden Beschreibung, der Zeichnung sowie den Unteransprüchen.

So wird bei einer bevorzugten Ausführungsform des Verfahrens vorgeschlagen, eine vorgegebene Anzahl von Meßwerten, die nach dem angenommenen Beginn der Verbrennung erfaßt wurden, mit dem Meßwert zu vergleichen, auf dessen Grundlage die zuletzt berechnete Differenz berechnet wurde. Auf diese Weise ist es möglich, zu überprüfen, ob tatsächlich der Beginn einer Verbrennung im Zylinder ermittelt worden ist, oder ob Schwankungen zwischen den Meßwerten aufgetreten sind. Übersteigt jeder nach dem angenommenen Beginn der Verbrennung erfaßte Meßwert, den Meßwert, auf dem die zuletzt berechnete Differenz basiert, bedeutet dies, daß sich die nachfolgend erfaßten Meßwerte stark verändert haben und von einer Verbrennung ausgegangen werden kann. Unterschreitet dagegen zumindest eine der nachträglich erfaßten Meßwerte den Meßwert, der für die Berechnung der letzten Differenz verwendet wurde, ist dagegen von Schwankungen im Verlauf der ermittelten Meßwerte auszugehen.

Bei hohen Drehzahlen kann es aufgrund des vergleichsweise schnell ablaufenden Verbrennungsvorgangs auch bei unmittelbar aufeinanderfolgenden Meßwerten zu deutlichen Abweichungen zwischen den aufeinanderfolgenden Meßwerten kommen, wodurch eine exakte Bestimmung des Beginns der Verbrennung erschwert ist. Aus diesem Grund wird bei einer bevorzugten Weiterbildung des Verfahrens vorgeschlagen, zwischen dem Meßwert, an dem der Beginn der Verbrennung angenommen wird, und dem diesem Meßwert in der Folge unmittelbar vorausgehenden Meßwert durch Interpolation einen Zwischenwert zu berechnen, der als der Wert definiert wird, bei dem die Verbrennung tatsächlich beginnt. Die Interpolation kann bei dieser bevorzugten Weiterbildung des Verfahrens beispielsweise dadurch erfolgen, daß durch den Meßwert, an dem der Beginn der Verbrennung angenommen wird, und durch den diesem Meßwert in der Folge unmittelbar nachgeordneten Meßwert eine Gerade gelegt wird, die eine aus der Folge von Mittelwerten gebildete Kurve schneidet. Der Schnittpunkt der Geraden mit der aus der Folge von Mittelwerten gebildeten Kurve entspricht dann dem Zwischenwert, der den interpolierten Zeitpunkt des Beginns der Verbrennung definiert. Da die Berechnung des Zwischenwertes nur bei hohen Drehzahlen des Verbrennungsmotors wirklich erforderlich ist, wird ferner vorgeschlagen, den Zwischenwert erst dann zu berechnen, wenn der Verbrennungsmotor mit einer über einer vorgegebenen Grenzdrehzahl liegenden Drehzahl betrieben wird.

Mit dem zuvor beschriebenen Verfahren, mit dem der Beginn der Verbrennung im Zylinder ermittelt werden kann, ist es auch möglich, zusätzlich das Ende der Verbrennung zu bestimmen. Hierzu wird durch Addition einer vorgegebenen Abweichung zu dem Meßwert, an dem der Beginn der Verbrennung angenommen wird, ein Referenzwert gebildet. Der so berechnete Referenzwert wird anschließend mit dem jeweils zuletzt abgespeicherten Meßwert verglichen. Der Meßwert der Folge, der während des Vergleiches als erster unter dem Referenzwert liegt, definiert dann das Ende der Verbrennung.

Um sicher zu gehen, daß die Bestimmung des Endes der Verbrennung nicht durch Schwankungen zwischen den ermittelten Meßwerten verfälscht wurde, wird bei dieser Ausführungsform des Verfahrens ferner vorgeschlagen, zur Bestätigung, daß die Verbrennung tatsächlich beendet ist, eine vorgegebene Anzahl von Meßwerten, die dem Meßwert, an dem das Ende der Verbrennung angenommen wird, in der Folge unmittelbar nachfolgen, gleichfalls mit dem Referenzwert zu vergleichen. Sollten zumindest mehrere der Meßwerte der vorgegebenen Anzahl an nachfolgenden Meßwerten über dem Referenzwert liegen, wird das Ende der Verbrennung nochmals neu bestimmt.

Um die Verbrennungsverläufe in verschiedenen Zylindern des Verbrennungsmotors vergleichen zu können, wird ferner vorgeschlagen, aus der Folge von ermittelten Meßwerten eine auf die Zeit bezogene Meßwertkurve zu bilden und anschließend über einen vorgegebenen Zeitabschnitt zur Berechnung des von der Meßwertkurve eingeschlossenen Flächeninhaltes die Meßwertkurve zu integrieren.

Die so berechneten Flächeninhalte der einzelnen Zylinder, die unter gleichen Betriebsbedingungen in den Zylindern des Verbrennungsmotors erfaßt wurden, können anschließend miteinander verglichen werden. Kommt es zu Abweichungen zwischen den einzelnen Flächeninhalten der Meßwertkurven, werden die Einspritzbedingungen der einzelnen Zylinder so nachgeregelt, daß die aus den während einer nachfolgenden Verbrennung aufgenommenen Meßwertkurven ermittelten Flächeninhalte der einzelnen Zylinder zumindest annähernd gleich sind. Auf diese Weise ist es möglich, die Verbrennungsverläufe in den einzelnen Zylindern so aufeinander abzustimmen, daß zumindest annähernd in jedem Zylinder die gleiche Leistung frei gesetzt wird, wodurch die Zylinder aufeinander abgestimmt werden. Hierdurch wird ein besonders ruhiger Lauf des Verbrennungsmotors erreicht.

Des weiteren ist es möglich, aus der Folge von Meßwerten eine auf die Zeit bezogene Meßwertkurve aufzutragen und aus der Steigung einer Kurvenflanke der Meßwertkurve zu ermitteln, ob vor der Verbrennung bereits eine Vorverbrennung erfolgt ist. Insbesondere bei Dieselmotoren ist es üblich, vor der eigentlichen Haupteinspritzung, bei der der für die Erzeugung des Drehmomentes erforderliche Kraftstoff in den Zylinder eingespritzt wird, eine Voreinspritzung vorzunehmen. Bei der Voreinspritzung wird eine verglichen mit der Haupteinspritzung geringere Menge Kraftstoff in den Zylinder eingespritzt, die sich im Zylinder entzündet und den Zylinder für die Haupteinspritzung so vorwärmt, daß der während der Haupteinspritzung eingespritzte Kraftstoff teilweise verdampft und sich gleichmäßig im Zylinder verteilt. Auf diese Weise wird eine bessere Verbrennung im Zylinder erreicht. Sollte beim Dieselmotor dagegen keine Voreinspritzung vorgenommen worden bzw. aufgetreten sein, die eine Vorverbrennung verursacht, verteilt sich der während der Haupteinspritzung eingespritzte Kraftstoff weniger gleichmäßig im Zylinder, wodurch eine spätere, jedoch schlagartige Verbrennung des Luft-Kraftstoff-Gemisches im Zylinder auftritt.

Aus der während einer Hauptverbrennung aufgenommenen Meßwertkurve kann folglich aus der Steigung einer der Kurvenflanken der Meßwertkurve ermittelt werden, ob vor der Verbrennung eine Vorverbrennung erfolgte oder nicht. Hierzu wird die maximale Steigung der Kurvenflanke mit einem Schwellwert verglichen, wobei bei Vorliegen einer Vorverbrennung die maximale Steigung unter dem Schwellwert liegt, während bei Fehlen einer Vorverbrennung die maximale Steigung über dem Schwellwert liegt.

Nachfolgend wird die Erfindung anhand eines Ausführungsbeispieles unter Bezugnahme auf die Zeichnung näher erläutert. Darin zeigen:
- Fig. 1: ein Diagramm, in dem der Abschnitt einer aus mehreren Meßwerten gebildeten Meßwertkurve und der Abschnitt einer aus mehreren Mittelwerten gebildeten Mittelwertkurve gezeigt ist,
- Fig. 2: ein Diagramm, in dem die Meßwertkurve und die Mittelwertkurve nach Ermittlung weiterer Meßwerte gezeigt ist,
- Fig. 3: ein dem Diagramm aus Fig. 1 entsprechendes Diagramm, in dem die Ermittlung des Zeitpunkts, an dem die Verbrennung beginnt, gezeigt ist,
- Fig. 4: ein Diagramm, in dem die Interpolation eines Zwischenwertes aus der Meßwertkurve in vergrößerter Darstellung gezeigt ist, und
- Fig. 5: ein Diagramm, in dem die während des gesamten Verbrennungsablaufes aufgenommene Meßwertkurve gezeigt ist.

Bei dem nachfolgend beschriebenen Ausführungsbeispiel wird das erfindungsgemäße Verfahren bei einem Dieselmotor eingesetzt ist. Während des Betriebes des Dieselmotors wird eine Vielzahl von Meßwerten erfaßt, mit denen die sich ändernde Leitfähigkeit des Gemisches im Zylinder während der Verbrennung dargestellt wird.

Zum Messen der Leitfähigkeit des im Zylinder befindlichen Verbrennungsgases wird eine Glühkerze des jeweiligen Zylinders des Dieselmotors verwendet. Die Glühkerze des jeweiligen Zylinders ist mit einem Referenzwiderstand in Reihe geschaltet und mit der Innenwand des Zylinders leitend verbunden. Zur Bestimmung der Leitfähigkeit des Verbrennungsgases im jeweiligen Zylinder auf Grundlage der im Verbrennungsgas enthaltenen positiv geladenen Teilchen wird an die Glühkerze während eines Teils des Verdichtungshubes und eines Teils des Arbeitshubes eine negative Spannung angelegt. Durch die während des Verbrennungsprozesses entstehenden positiv geladenen Teilchen ändert sich die Leitfähigkeit des Verbrennungsgases zwischen der Glühkerze und der Innenwand des Zylinders, wodurch sich die am Referenzwiderstand abfallende Spannung ändert, die gemessen und zur Auswertung verstärkt wird. Die verschiedenen Spannungswerte werden als Folge von Meßwerten P₀ bis Pₙ₊ₓ in einem Speicher abgespeichert.

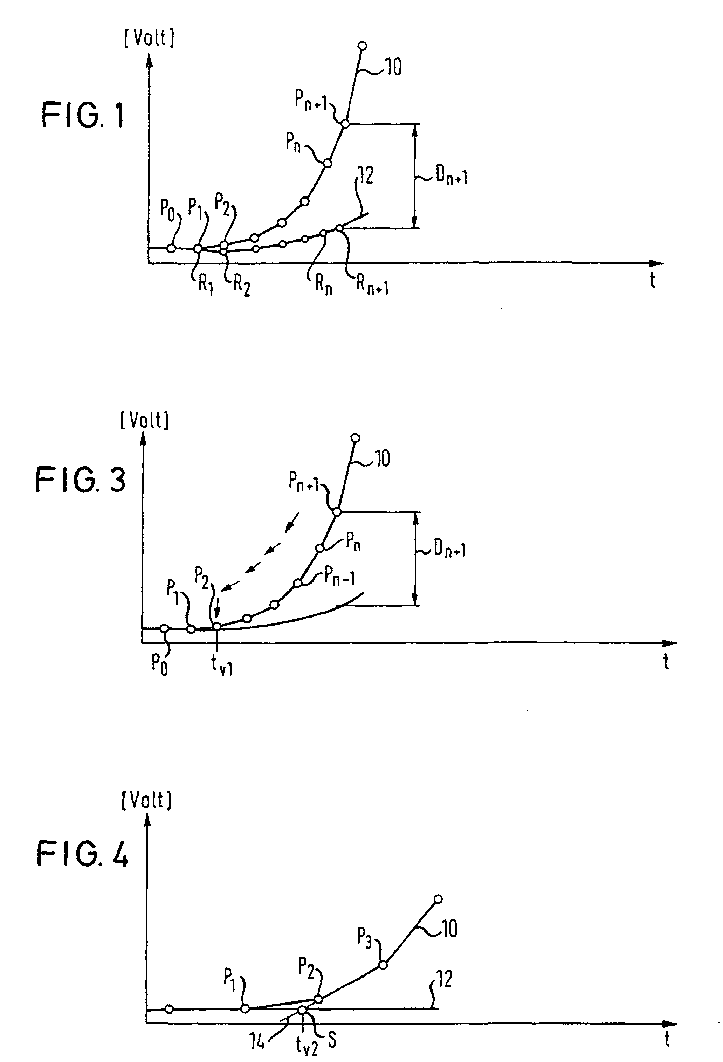

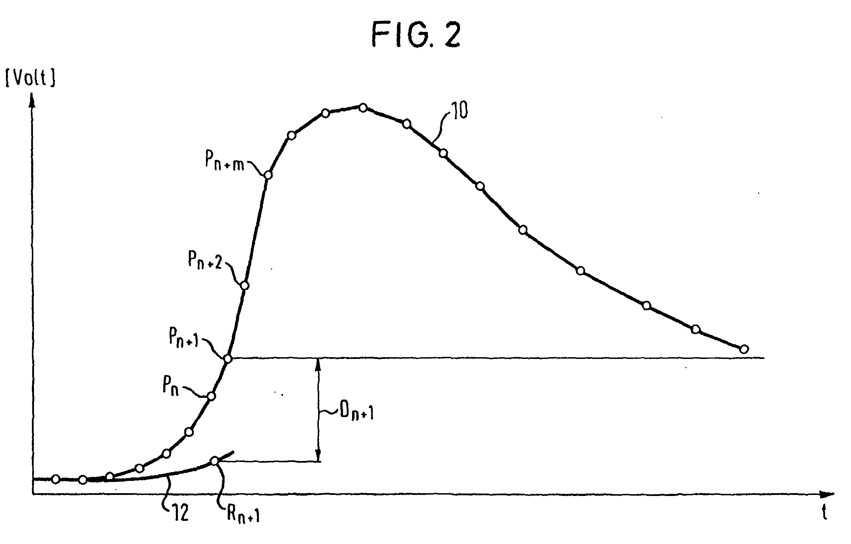

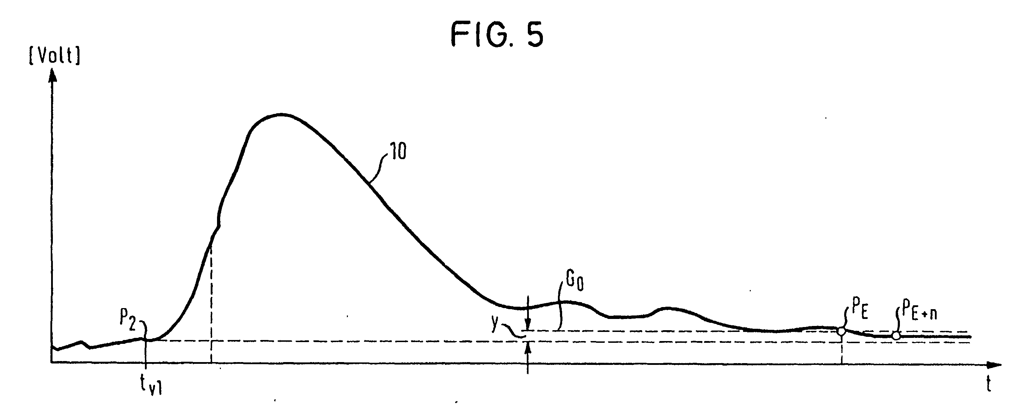

In Fig. 1 ist die Folge von Meßwerten P₀ bis Pₙ₊₁ als Meßwertkurve 10 über einer Zeitachse t aufgetragen. Der Verlauf der Meßwertkurve 10 entspricht der sich ändernden Leitfähigkeit des Gemisches im Zylinder. So verläuft die Meßwertkurve 10 vor der Verbrennung in etwa parallel zur Zeitachse t, da sich vor der Verbrennung die Leitfähigkeit des Gemisches im Zylinder nur unwesentlich ändert. Sobald die Verbrennung des Gemisches im Zylinder beginnt, nimmt die Leitfähigkeit des Verbrennungsgases aufgrund des zunehmenden Anteils an geladenen Teilchen im Verbrennungsgas zu, wodurch die Meßwerte P₂ bis Pₙ₊₁ eine höhere Spannung anzeigen, wie der Verlauf der Meßwertkurve 10 in den Fig. 1 bis 5 zeigt. Sobald die Verbrennung abgeschlossen ist, nimmt die Leitfähigkeit des Verbrennungsgases im Zylinder wieder ab, da sich die positiv und negativ geladenen Moleküle sowie die Elektronen im Verbrennungsgas wieder miteinander verbinden. Dies zeigt insbesondere der Verlauf der Meßwertkurve 10 in Fig. 2 und in Fig. 5. Die ermittelten Meßwerte P₀ bis Pₙ₊₁ werden als Folge von Meßwerten in einem Speicher abgespeichert, wobei der jeweils neu ermittelte Meßwert Pₙ₊₁ der abgespeicherten Folge hinzugefügt wird.

Wie Fig. 1 weiter zeigt, wird aus den Meßwerten P₁ bis Pₙ₊₁ eine Folge von Mittelwerten R₁ bis Rₙ₊₁ berechnet. Hierzu wird aus dem jeweils zuletzt abgespeicherten Meßwert Pₙ₊₁ und dem diesem vorausgehenden Meßwert Pₙ das arithmetische Mittel berechnet und als neuer Mittelwert Rₙ₊₁ abgespeichert. Die Folge von abgespeicherten Mittelwerten R₁ bis Rₙ₊₁ bildet eine Mittelwertkurve 12, die gleichfalls in Fig. 1 gezeigt ist. Sofern sich die Leitfähigkeit des Verbrennungsgases im überwachten Zylinder nicht ändert, verlaufen die Meßwertkurve 10 und die Mittelkurve 12 nahezu identisch. Bei kleineren Abweichungen unmittelbar aufeinanderfolgender Meßwerte P₁ und P₂ weichen die entsprechend berechneten Mittelwerte R₁ und R₂ zwar geringfügig von den Meßwerten P₁ und P₂ ab, die Abweichung ist jedoch so gering, daß sie unbeachtlich ist.

Sobald jedoch die Verbrennung im Zylinder des Dieselmotors beginnt, nimmt die Leitfähigkeit des Verbrennungsgases im Zylinder innerhalb kürzester Zeit so stark zu, daß die Meßwertkurve 10 eine deutliche Steigung erfährt. Aufgrund der großen Abweichungen zwischen den jeweils unmittelbar aufeinanderfolgenden Meßwerten, wie stellvertretend beispielsweise die Meßwerte Pₙ und Pₙ₊₁ zeigen, unterscheidet sich folglich der jeweils für den zuletzt abgespeicherten Meßwert Pₙ₊₁ berechnete Mittelwert Rₙ₊₁ so stark von dem zuletzt abgespeicherten Meßwert Pₙ₊₁, daß die Meßwertkurve 10 und die Mittelwertkurve 12 deutlich auseinanderlaufen.

Bei dem erfindungsgemäßen Verfahren wird nun die Differenz Dₙ₊₁ zwischen dem neu abgespeicherten Meßwert Pₙ₊₁ und dem auf diesem basierenden, neu berechneten Mittelwert Rₙ₊₁ gebildet. Liegt die Differenz Dₙ₊₁ unter einem vorgegebenen Grenzwert, fährt die Motorregelung mit der Erfassung weiterer Meßwerte Pₙ₊ₓ und mit der Berechnung weiterer Mittelwerte Rₙ₊ₓ fort.

Liegt dagegen die Differenz Dₙ₊₁ über dem vorgegebenen Grenzwert, überprüft die Motorregelung, ob jeder Meßwert Pₙ₊ₘ einer vorgegebenen Anzahl nachfolgend ermittelter Meßwerte Pₙ₊ₘ größer ist, als der Meßwert Pₙ₊₁, der als Grundlage für die Bildung der zuletzt berechneten Differenz Dₙ₊₁ diente. Ist jeder der Meßwerte Pₙ₊ₘ der vorgegebenen Anzahl an Meßwerten größer als der Meßwert Pₙ₊₁, bedeutet dies, daß tatsächlich ein Verbrennungsvorgang vorliegt, wie er beispielsweise in Fig. 2 durch den Verlauf der Meßwertkurve 10 dargestellt ist.

Sollte die Motorregelung dagegen feststellen, daß die nachfolgend erfaßten Meßwerte Pₙ₊ₘ teilweise unter dem Meßwert Pₙ₊₁ liegen, bedeutet dies, daß nur Schwankungen im Verlauf der Meßwertkurve 10 aufgetreten sind.

Stellt die Motorregelung fest, daß eine Verbrennung vorliegt, beginnt sie in einem weiteren Verfahrensschritt den Beginn des Verbrennungsvorgangs zu ermitteln, wie nachfolgend unter Bezugnahme auf Fig. 3 näher erläutert wird.

Sobald die Motorsteuerung feststellt, daß tatsächlich eine Verbrennung vorliegt, wird jeder Meßwert Pₙ der Folge mit dem diesen Meßwert Pₙ unmittelbar vorausgehenden Meßwert Pₙ₋₁ verglichen, der unmittelbar vor dem Meßwert Pₙ abgespeichert wurde. Der Vergleich der einzelnen Meßwerte Pₙ mit den diesen vorausgehenden Meßwerten Pₙ₋₁ wird solange durchgeführt, bis kein bzw. allenfalls ein äußerst geringer Unterschied zwischen den jeweils miteinander verglichenen Meßwertpaaren Pₙ und Pₙ₋₁ besteht. In Fig. 3 ist dies zwischen den unmittelbar aufeinanderfolgenden Meßwerten P₀ und P₁ der Fall. Der Beginn der Verbrennung wird dann von der Motorregelung an dem dem Meßwert P₁ nachfolgenden Meßwert P₂ angenommen und entspricht im vorliegenden Fall dem Wert tᵥ₁.

Wird der Dieselmotor mit sehr hoher Drehzahl betrieben, besteht das Problem, daß Änderungen zwischen den Meßwerten P₀ bis Pₙ₊ₓ aufgrund der schneller ablaufenden Verbrennung im Zylinder deutlich größer ausfallen als Änderungen zwischen den Meßwerten P₀ bis Pₙ₊ₓ bei Verbrennungen, die während eines Betriebes mit niedrigeren Drehzahlen auftreten. Um dennoch einen möglichst genauen Zeitpunkt zu bestimmen, an dem die Verbrennung im Zylinder beginnt, führt die Motorregelung, sobald der Dieselmotor mit einer Drehzahl betrieben wird, die eine vorgegebene Grenzdrehzahl überschreitet, einen Interpolationsschritt aus, mit dem der Beginn der Verbrennung verglichen mit dem in Fig. 3 beschriebenen Verfahren noch genauer ermittelt werden kann. Dieses Interpolationsverfahren ist nachfolgend unter Bezugnahme auf Fig. 4 näher erläutert.

Nachdem die Motorregelung den Meßwert P₂ ermittelt hat, bei dem die erste Änderung bezogen auf vorausgehende Meßwerte Po und Pi aufgetreten ist, fährt die Motorregelung mit der Interpolation zur Bestimmung des tatsächlichen Beginns tᵥ₂ der Verbrennung fort. Zu diesem Zweck wird eine Gerade 14 durch den Meßwert P₂, bei dem die erste Änderung der Leitfähigkeit im Verbrennungsgas auftritt, und durch den dem Meßwert P₂ unmittelbar nachfolgenden Meßwert P₃ gezogen. Die durch die beiden Meßwerte P₂ und P₃ verlaufende Gerade wird in Richtung der Zeitachse t soweit verlängert, bis sie die Mittelwertkurve 12, die kurz nach Beginn der Verbrennung noch zumindest annähernd parallel zur Zeitachse t verläuft, in einem Schnittpunkt S schneidet. Dieser Schnittpunkt S definiert den aus der Meßwertkurve 10 interpolierten Beginn tᵥ₂ der Verbrennung.

Mit Hilfe des ermittelten Beginns tᵥ₁ bzw. tᵥ₂ der Verbrennung läßt sich auch sinnvoll das Ende des Verbrennungsvorgangs im Zylinder erfassen. Zu diesem Zweck wird zu dem Betrag des Meßwertes P₂ bzw. zu dem Betrag des Schnittpunktes S, an dem der Beginn tᵥ₁ bzw. tᵥ₂ der Verbrennung durch eines der beiden zuvor beschriebenen Verfahren bestimmt worden ist, eine Abweichung y addiert, wodurch ein Grenzwert G₀ definiert wird, der in Fig. 5 als parallel zur Zeitachse t verlaufende, gestrichelte Linie dargestellt ist.

Um das Ende der Verbrennung zu bestimmen, werden von der Motorregelung die jeweils erfaßten Meßwerte Pₙ₊ₓ mit dem Grenzwert G₀ verglichen. Solange die ermittelten Meßwerte Pₙ₊ₓ über dem Grenzwert G₀ liegen, ist die Verbrennung noch in Gang. Ab einem bestimmten Abschnitt der Verbrennung fallen einzelne Meßwerte P_{E} auch unter den Grenzwert G₀. In einem solchen Fall, bei dem ein Meßwert P_{E} unter den Grenzwert G₀ fällt, vergleicht die Motorsteuerung die dem Meßwert P_{E} nachfolgend ermittelten Meßwerte P_{E+n} gleichfalls mit dem Grenzwert G₀. Stellt sich während des Vergleiches heraus, daß zumindest mehrere der nachfolgend ermittelten Meßwerte P_{E+n} größer sind als der Grenzwert G₀, bedeutet dies, daß die Verbrennung noch nicht abgeschlossen ist.

Stellt dagegen die Motorregelung fest, daß eine vorgegebene Anzahl an nachfolgenden Meßwerten P_{E+n} gleichfalls unter dem Grenzwert G₀ liegt, signalisiert die Motorregelung, daß die Verbrennung beendet ist. Um den Zeitpunkt, an dem die Verbrennung abgeschlossen war, zu ermitteln, vergleicht die Motorregelung jeden Meßwert P_{E+n} mit dem Grenzwert G₀ erneut, wobei der Vergleich in entgegengesetzter Reihenfolge erfolgt, in der die ermittelten Meßwerte P_{E+n} in der Folge abgespeichert wurden. Während des Vergleichs wird schließlich der Meßwert P_{E} ermittelt, der den ersten Meßwert der nachfolgend abgespeicherten Meßwert P_{E+n} darstellt, die unter dem Grenzwert G₀ liegen. Dieser erste Meßwert P_{E} definiert den Zeitpunkt t_{E}, an dem die Verbrennung beendet war.

Mit Hilfe der auf diese Weise ermittelten Anfangs- und Endzeitpunkte der Verbrennung im jeweiligen Zylinder kann die Motorregelung die Einspritzung in den Dieselmotor entsprechend regeln. Insbesondere besteht die Möglichkeit durch Integrieren der ermittelten Meßwertkurve 10 über einen vorgegebenen Zeitabschnitt den Flächeninhalt unter der Meßwertkurve 10 zu berechnen. Dieser Flächeninhalt kann mit dem Flächeninhalt der für die anderen Zylinder aufgenommen Meßwertkurven verglichen werden. Des weiteren können auch die Anfangs- und Endzeitpunkte der in den verschiedenen Zylindern auftretenden Verbrennung miteinander verglichen werden. Soll der Dieselmotor besonders ruhig laufen, können durch entsprechendes Vergleichen der Anfangs- und Endzeitpunkte der Meßwertkurven der einzelnen Zylinder sowie durch Vergleichen der jeweils berechneten Flächeninhalte Unterschiede zwischen den einzelnen Verbrennungsvorgängen in den verschiedenen Zylindern ermittelt werden. Entsprechend der ermittelten Unterschiede kann die Motorregelung anschließend die Einspritzparameter für die einzelnen Zylinder so einstellen, daß die Verläufe der für die verschiedenen Zylinder ermittelten Meßwertkurven zumindest annähernd identisch sind.

Ferner besteht die Möglichkeit, aus dem Verlauf der jeweils ermittelten Meßwertkurve zu bestimmten, ob eine Vorverbrennung vor der eigentlichen Hauptverbrennung aufgetreten ist oder nicht. So wird insbesondere bei Dieselmotoren vor der Haupteinspritzung, bei der die für die Erzeugung des Drehmomentes erforderliche Kraftstoffmenge eingespritzt wird, eine Voreinspritzung durchgeführt. Bei der Voreinspritzung wird eine geringe Menge an Kraftstoff in den Zylinder eingespritzt und zur Verbrennung gebracht, um den Zylinder vor der Haupteinspritzung zu erwärmen, damit der während der Haupteinspritzung eingespritzte Kraftstoff verdampft und sich auf diese Weise gleichmäßiger im Zylinder verteilt. Aus der Steigung in der Meßwertkurve 10 kann nun unmittelbar ermittelt werden, ob eine Vorverbrennung vor der Hauptverbrennung aufgetreten ist oder nicht. Zeigt die Meßwertkurve eine große Steigung, bedeutet dies, daß die Hauptverbrennung schlagartig erfolgt ist, was wiederum den Schluß zuläßt, daß keine Vorverbrennung aufgetreten ist. Zeigt die Meßwertkurve dagegen eine geringe Steigung bedeutet dies, daß der Kraftstoff für die Hauptverbrennung bereits vor der Hauptverbrennung zumindest teilweise verdampft worden ist, was unmittelbar auf das Vorliegen einer Vorverbrennung hinweist.

### Bezugszeichenliste

- P₀ bis Pₙ₊ₓ: Meßwerte
- t: Zeitachse
- 10: Meßwertkurve
- Pₙ₊₁: neu abgespeicherter Meßwert
- R₁ bis Rₙ₊ₓ: Mittelwerte
- 12: Mittelwertkurve
- Rₙ₊₁: neu berechneter Mittelwert
- Dₙ₊₁: erste Differenz
- Pₙ₊ₘ: nachfolgend abgespeicherte Meßwerte
- Pₙ₋₁: in der Folge vorausgehender Meßwert
- tᵥ₁: Beginn der Verbrennung bei niedriger Drehzahl
- 14: Gerade
- S: Schnittpunkt
- tᵥ₂: Beginn der Verbrennung bei hoher Drehzahl
- y: Abweichung
- G₀: Grenzwert
- P_{E}: erster Meßwert am Ende der Verbrennung
- P_{E+n}: weitere Meßwerte am Ende der Verbrennung
- t_{E}: Ende der Verbrennung

## Patentansprüche

1. Verfahren zum Bestimmen des Beginns einer Verbrennung im Zylinder eines Verbrennungsmotors, insbesondere im Zylinder eines Dieselmotors, wobei bei dem Verfahren
aufeinanderfolgend Meßwerte (P) ermittelt und abgespeichert werden, die zumindest eine physikalische Eigenschaft des im Zylinder enthaltenen Gemisches aus Gasen und Kraftstoff beschreiben, jeweils ein Mittelwert (Rₙ₊₁) aus dem zuletzt abgespeicherten Meßwert (Pₙ₊₁) und einer vorgegebenen Anzahl von Meßwerten (Pₙ), die dem zuletzt abgespeicherten Meßwert (Pₙ₊₁) in der Folge unmittelbar vorausgehen, berechnet wird,
eine Differenz (Dₙ₊₁) zwischen dem zuletzt berechneten Mittelwert (Rₙ₊₁) und dem zuletzt gespeicherten Meßwert (Pₙ₊₁) gebildet wird, die Differenz (Dₙ₊₁) mit einem Grenzwert verglichen wird,
jeweils ein Meßwert (Pₙ) der Folge mit dem diesem Meßwert (Pₙ) unmittelbar vorausgehenden Meßwert (Pₙ₋₁) verglichen wird, wenn die zuletzt berechnete Differenz (Dₙ₊₁) größer ist als der Grenzwert, und der Meßwert (P₂), der sich während der Vergleiche als letzter der miteinander verglichenen Meßwerte (P) von seinem ihm unmittelbar in der Folge vorausgehenden Meßwert (P₁) unterscheidet, als der Meßwert (P₂) definiert wird, bei dem die Verbrennung begonnen hat.

2. Verfahren nach Anspruch 1, bei dem zur Bestätigung, daß eine Verbrennung vorliegt, eine vorgegebene Anzahl von Meßwerten (Pₙ₊ₘ), die nach dem angenommenen Beginn (tᵥ₁) der Verbrennung ermittelt wurden, mit dem Meßwert (Pₙ₊₁) verglichen wird, der als Grundlage für die zuletzt berechnete Differenz (Dₙ₊₁) verwendet wurde, wobei, sobald zumindest einer der nach dem angenommenen Beginn (ₜᵥ₁) der Verbrennung ermittelten Meßwerte (Pₙ₊ₘ) kleiner ist als der für die Berechnung der Differenz (Dₙ₊₁) verwendete Meßwert (Pₙ₊₁), das Vorliegen einer Verbrennung verneint wird.

3. Verfahren nach Anspruch 1 oder 2, bei dem zwischen dem Meßwert (P₂), an dem der Beginn (tᵥ₁) der Verbrennung angenommen wird, und dem diesem Meßwert (P₂) in der Folge unmittelbar vorausgehenden Meßwert (P₁) durch Interpolation ein Zwischenwert berechnet wird, der als der Wert (S) definiert wird, bei dem die Verbrennung beginnt.

4. Verfahren nach Anspruch 3, bei dem der Zwischenwert ermittelt wird, indem durch den Meßwert (P₂), an dem der Beginn (tᵥ₁) der Verbrennung angenommen wird, und durch den diesem Meßwert (P₂) in der Folge unmittelbar nachgeordneten Meßwert (P₃) eine Gerade (14) gelegt, ein Schnittpunkt (S) der Geraden (14) mit einer aus der Folge von Mittelwerten (R) gebildeten Kurve (12) bestimmt und der Zwischenwert dem Schnittpunkt (S) gleichgesetzt wird.

5. Verfahren nach Anspruch 3 oder 4, bei dem der Zwischenwert erst berechnet wird, wenn der Verbrennungsmotor mit einer über einer vorgegebenen Grenzdrehzahl liegenden Drehzahl betrieben wird.

6. Verfahren nach einem der Ansprüche 1 bis 5, bei dem jeder Mittelwert (R) durch Berechnung des arithmetischen Mittels, des geometrischen Mittels oder des harmonischen Mittels aus dem zuletzt gespeicherten Meßwert (Pₙ₊₁) und dem dem gespeicherten Meßwert (Pₙ₊₁) in der Folge unmittelbar vorausgehenden Meßwert (Pₙ) ermittelt wird.

7. Verfahren nach einem der vorhergehenden Ansprüche, bei dem mit dem Verfahren auch das Ende (t_{E}) der Verbrennung bestimmt wird, indem durch Addition einer vorgegebenen Abweichung (y) zu dem Meßwert (P₂), an dem der Beginn (tᵥ₁, tᵥ₂) der Verbrennung angenommen bzw. bestimmt wird, ein Referenzwert (Go) gebildet wird, der so berechnete Referenzwert (Go) mit dem jeweils zuletzt abgespeicherten Meßwert (P) verglichen wird, und der Meßwert (P_{E}) der Folge, der als erster unter dem Referenzwert (G₀) lag, das Ende (t_{E}) der Verbrennung definiert.

8. Verfahren nach Anspruch 7, bei dem zur Bestätigung, daß die Verbrennung beendet ist, eine vorgegebene Anzahl von Meßwerten (P_{E+n}), die dem Meßwert (P_{E}), an dem das Ende (t_{E}) der Verbrennung angenommen wird, in der Folge unmittelbar nachfolgen, mit dem Referenzwert (G₀) verglichen werden, und das Ende (t_{E}) der Verbrennung nochmals neu bestimmt werden muß, wenn zumindest mehrere der Meßwerte (P_{E+n}) über dem Referenzwert (G₀) liegen.

9. Verfahren nach einem der vorhergehenden Ansprüche, bei dem aus der Folge von Meßwerten (P) eine auf die Zeit bezogene Meßwertkurve (10) gebildet und anschließend die Meßwertkurve (10) zur Berechnung des von der Meßwertkurve (10) eingeschlossenen Flächeninhaltes über einen vorgegebenen Zeitabschnitt integriert wird.

10. Verfahren nach Anspruch 9, bei dem der für den betreffenden Zylinder spezifische, berechnete Flächeninhalt mit den Flächeninhalten von Meßwertkurven verglichen wird, die unter gleichen Betriebsbedingungen in den weiteren Zylindern des Verbrennungsmotors erfaßt wurden, und bei Abweichungen zwischen den einzelnen Flächeninhalten der Meßwertkurven die Einspritzbedingungen der einzelnen Zylinder so nachgeregelt werden, daß die aus den während einer nachfolgenden Verbrennung aufgenommenen Meßwertkurven ermittelten Flächeninhalte der einzelnen Zylinder zumindest annähernd gleich sind.

11. Verfahren nach einem der vorhergehenden Ansprüche, bei dem aus der Folge von Meßwerten (P) eine auf die Zeit bezogene Meßwertkurve (10) aufgetragen wird, und aus der Steigung einer Kurvenflanke der Meßwertkurve (10) ermittelt wird, ob vor der Verbrennung eine Vorverbrennung erfolgte, indem die maximale Steigung der Kurvenflanke mit einem Schwellwert verglichen wird, wobei bei Vorliegen einer Vorverbrennung die maximale Steigung unter dem Schwellwert liegt, und bei Fehlen einer Vorverbrennung die maximale Steigung über dem Schwellwert liegt.

12. Verfahren nach einem der vorhergehenden Ansprüche, bei dem die Leitfähigkeit des im Zylinder enthaltenen Gemisches aus Gasen und Kraftstoff erfaßt und als Leitfähigkeits-Meßwert (P) ausgegeben wird.

## Claims

1. Method for determining the start of combustion in the cylinder of an internal combustion engine, in particular in the cylinder of a diesel engine, wherein in the method measured values (P) which describe at least one physical property of the mixture of gases and fuel present in the cylinder are successively determined and stored,
in each case a mean value (Rₙ₊₁) of the last stored measured value (Pₙ₊₁) and a specified number of measured values (Pₙ) immediately preceding in sequence the last stored measured value (Pₙ₊₁) is calculated,
a difference (Dₙ₊₁) between the last calculated mean value (Rₙ₊₁) and the last stored measured value (Pₙ₊₁) is taken, the difference (Dₙ₊₁) is compared with a threshold value, in each case a measured value (Pₙ) in the sequence is compared with the measured value (Pₙ₋₁) immediately preceding this measured value (Pₙ), when the last calculated difference (Dₙ₊₁) is greater than the threshold value and the measured value (P₂) which as last during the comparisons of the measured values (P) compared with one another differs from the measured value (P₁) immediately preceding it in the sequence is defined as the measured value (P₂) at which combustion started.

2. Method according to claim 1 in which to confirm that combustion is taking place a specified number of measured values (Pₙ₊ₘ) which were determined after the assumed start of combustion is compared with the measured value (Pₙ₊₁) which was used as the basis for the last calculated difference (Dₙ₊₁), wherein as soon as at least one of the measured values (Pₙ₊ₘ) determined after the assumed start (tᵥ₁) of combustion is smaller than the measured value (Pₙ₊₁) used for calculating the difference (Dₙ₊₁) the occurrence of combustion is ruled out.

3. Method according to claim 1 or 2 in which between the measured value (P₂) at which the start (tᵥ₁) of combustion is assumed and the measured value (P₁) immediately preceding this measured value (P₂) in the sequence an intermediate value is calculated by interpolation which is defined as the value (S) at which combustion starts.

4. Method according to claim 3 in which the intermediate value is determined by drawing a straight line (14) through the measured value (P₂) at which the start (tᵥ₁) of combustion is assumed and through the measured value (P₃) immediately following this measured value (P₂) in the sequence, determining a point of intersection (S) of the straight line (14) with a curve (12) formed by the sequence of means values and equating the intermediate value with the point of intersection (S).

5. Method according to claim 3 or 4 in which the intermediate value is only calculated when the internal combustion engine is operated at speed above a specified threshold speed.

6. Method according to one of claims 1 to 5 in which each mean value (R) is determined by calculating the arithmetic mean, the geometric mean or the harmonic mean of the last stored measured value (Pₙ₊₁) and the measured value (Pₙ) immediately preceding the stored measured value (Pₙ₊₁) in the sequence.

7. Method according to one of the preceding claims in which using the method the end (t_{E}) of combustion is also determined by adding a specified deviation (y) to the measured value (P₂) at which the start (tᵥ₁, tᵥ₂) of combustion is assumed or determined to form a reference value (G₀), comparing the reference value (G₀) calculated in this way with the measured value (P) last stored at the time and defining the end (t_{E}) of combustion as the measured value (P_{E}) in the sequence which was the first one below the reference value (G₀).

8. Method according to claim 7 in which to confirm that combustion is ended a specified number of measured values (P_{E+n}) immediately following in the sequence the measured value (P_{E}) at which the end (t_{E}) of combustion is assumed is compared with the reference value (G₀) and the end (t_{E}) of combustion must be determined once again if at least a plurality of the measured values (P_{E+n}) are above the reference value (G₀).

9. Method according to one of the preceding claims in which from the sequence of measured values (P) a curve (10) of measured values versus time is plotted and then the measured value curve (10) is integrated over a specified time interval to calculate the area enclosed by the measured value curve (10).

10. Method according to claim 9 in which the specific calculated enclosed area for the cylinder in question is compared with the areas enclosed by measured value curves measured under the same conditions in the other cylinders of the internal combustion engine and in the event of deviations between the individual areas enclosed by the measured value curves the injection conditions of the individual cylinders are readjusted in such a way that the enclosed areas determined for the individual cylinders from the measured value curves recorded during a subsequent combustion process are at least approximately equal.

11. Method according to one of the preceding claims in which from the sequence of measured values (P) a curve (10) of measured values versus time is plotted and from the gradient of a side of the measured value curve (10) it is determined whether prior to combustion a precombustion process ensued in that the maximum gradient of the side of the curve is compared with a threshold value, wherein if precombustion has occurred the maximum gradient is below the threshold value and in the absence of precombustion the maximum gradient is above the threshold value.

12. Method according to one of the preceding claims in which the conductivity of the mixture of gases and fuel present in the cylinder is measured and output as the conductivity measured value (P).

## Revendications

1. Procédé pour détecter le début de la combustion dans un cylindre d'un moteur à combustion interne, en particulier dans un cylindre d'un moteur diesel, dans lequel, dans le procédé, on détermine successivement et on mémorise des valeurs de mesure (P), qui décrivent au moins une propriété physique du mélange de gaz et de carburant contenu dans le cylindre, on calcule chaque fois une valeur moyenne (Rₙ₊₁) à partir de la valeur de mesure mémorisée en dernier lieu (Pₙ₊₁) et d'un nombre prédéterminé de valeurs de mesure (Pₙ), qui précèdent immédiatement dans la séquence la valeur de mesure mémorisée en dernier lieu (Pₙ₊₁), on forme une différence (Dₙ₊₁) entre la valeur moyenne calculée en dernier lieu (Rₙ₊₁) et la valeur de mesure mémorisée en dernier lieu (Pₙ₊₁), on compare la différence (Dₙ₊₁) à une valeur limite, lorsque la différence calculée en dernier lieu (Dₙ₊₁) est supérieure à la valeur limite, on compare chaque fois une valeur de mesure (Pₙ) de la séquence à la valeur de mesure (Pₙ₋₁) précédant immédiatement cette valeur de mesure (Pₙ), et on désigne comme étant la valeur de mesure (P₂), pour laquelle la combustion a commencé, la dernière des valeurs de mesure (P) comparées les unes aux autres qui, pendant les comparaisons, se différencie par rapport à la valeur de mesure (P₁) qui la précède immédiatement dans la séquence.

2. Procédé selon la revendication 1, dans lequel, pour confirmer qu'il existe une combustion, on compare un nombre prédéterminé de valeurs de mesure (Pₙ₊ₘ), qui ont été détectées après le début présumé (tᵥ₁) de la combustion, à la valeur de mesure (Pₙ₊₁) qui a été utilisée comme base pour la différence calculée en dernier lieu (Dₙ₊₁), dans lequel on indique l'absence de combustion, dès qu'au moins une des valeurs de mesure (Pₙ₊ₘ) détectées après le début présumé (tᵥ₁) de la combustion est inférieure à la valeur de mesure (Pₙ₊₁) utilisée pour le calcul de la différence (Dₙ₊₁).

3. Procédé selon la revendication 1 ou 2, dans lequel on calcule une valeur intermédiaire par interpolation entre la valeur de mesure (P₂), pour laquelle le début (tᵥ₁) de la combustion est présumé, et la valeur de mesure (P₁) précédant immédiatement cette valeur de mesure (P₂) dans la séquence, cette valeur intermédiaire étant définie comme la valeur (S) à laquelle la combustion débute.

4. Procédé selon la revendication 3, dans lequel on détermine la valeur intermédiaire en traçant une droite (14) passant par la valeur de mesure (P₂), pour laquelle le début (tᵥ₁) de la combustion est présumé, et par la valeur de mesure (P₃) succédant immédiatement à cette valeur de mesure (P₂) dans la séquence, en déterminant un point d'intersection (S) de la droite (14) avec une courbe (12) formée à partir de la séquence des valeurs moyennes (R), et en assimilant la valeur intermédiaire au point d'intersection (S).

5. Procédé selon la revendication 3 ou 4, dans lequel la valeur intermédiaire n'est calculée que si le moteur à combustion interne fonctionne à une vitesse de rotation supérieure à une vitesse de rotation limite prédéterminée.

6. Procédé selon l'une quelconque des revendications 1 à 5, dans lequel on détermine chaque valeur moyenne (R) par le calcul de la moyenne arithmétique, de la moyenne géométrique ou de la moyenne harmonique entre la valeur de mesure (Pₙ₊₁) mémorisée en dernier lieu et la valeur de mesure (Pₙ) précédant immédiatement dans la séquence la valeur de mesure mémorisée (Pₙ₊₁).

7. Procédé selon l'une quelconque des revendications précédentes, dans lequel on détermine également par le procédé la fin (t_{E}) de la combustion, en formant une valeur de référence (G₀) par addition d'un écart prédéterminé (y) à la valeur de mesure (P₂) pour laquelle le début (tᵥ₁, tᵥ₂) de la combustion est présumé, respectivement déterminé, en comparant la valeur de référence (G₀) ainsi calculée à la valeur de mesure (P) mémorisée en dernier lieu, et en définissant la valeur de mesure (P_{E}) de la séquence, qui est la première à être inférieure à la valeur de référence (G₀), comme marquant la fin (t_{E}) de la combustion.

8. Procédé selon la revendication 7, dans lequel, pour confirmer que la combustion est terminée, on compare un nombre prédéterminé de valeurs de mesure (P_{E+n}), qui suivent immédiatement dans la séquence la valeur de mesure (P_{E}) à laquelle la fin (t_{E}) de la combustion est présumée, à la valeur de référence (G₀), et on doit à nouveau déterminer la fin (t_{E}) de la combustion lorsqu'au moins plusieurs des valeurs de mesure (P_{E+n}) sont supérieures à la valeur de référence (G₀).

9. Procédé selon l'une quelconque des revendications précédentes, dans lequel on forme une courbe des valeurs de mesure (10) en fonction du temps à partir de la séquence des valeurs de mesure (P), et on intègre ensuite la courbe des valeurs de mesure (10) sur une période de temps prédéterminée pour calculer l'aire de la surface entourée par la courbe des valeurs de mesure (10).

10. Procédé selon la revendication 9, dans lequel on compare l'aire de surface spécifique calculée pour le cylindre concerné avec les aires de surface de courbes des valeurs de mesure, qui ont été détectées dans les autres cylindres du moteur à combustion interne dans les mêmes conditions de fonctionnement et, en cas d'écarts entre les aires de surface individuelles des courbes des valeurs de mesure, on réajuste les conditions d'injection des cylindres individuels de telle façon que les aires de surface des cylindres individuels, déterminées à partir des courbes des valeurs de mesure enregistrées pendant une combustion ultérieure, soient au moins approximativement égales.

11. Procédé selon l'une quelconque des revendications précédentes, dans lequel on trace, à partir de la séquence des valeurs de mesure (P), une courbe des valeurs de mesure (10) en fonction du temps, et on détermine à partir de la pente d'un flanc de la courbe des valeurs de mesure (10) s'il s'est produit une précombustion avant la combustion, en comparant la pente maximale du flanc de la courbe à une valeur de seuil, la pente maximale étant inférieure à la valeur de seuil en cas d'existence d'une précombustion, et la pente maximale étant supérieure à la valeur de seuil en cas d'absence d'une précombustion.

12. Procédé selon l'une quelconque des revendications précédentes, dans lequel on détecte la conductibilité du mélange de gaz et de carburant contenu dans le cylindre et on la présente sous la forme d'une courbe conductibilité-valeur de mesure (P).
